# EUROPEAN PATENT APPLICATION

(11) **EP 1 952 736 A2**
(43) Date of publication of application: **06.08.2008**
(21) Application number: 08001606.6
(22) Date of filing: 29.01.2008
(51) Int. Cl.: A47J 37/01

(54) **Flexible polymer coated mesh cooking basket**

(30) Priority: 31.01.2007 US 700548
(71) Applicant: ADVANCED FLEXIBLE COMPOSITES, INC., Lake in the Hills, IL 60102 (US)
(72) Inventor: Baker, Michael J., Petersburg, New York 12138 (US); Lewis, William J., Woodstock, Illinois 60098 (US)
(74) Representative: Fleck, Hermann-Josef

(57) **Abstract**

A food support for placing and removing food items from, and holding food items while in, an oven. The food support includes a mesh substrate coated with a heat resistant polymer. The coated mesh substrate includes a plurality of openings having a length or width of about 3.81 mm to about 12.70 mm and thickness of greater than about 35 mils. An upwardly angled edge reinforcement member formed of a coated edge substrate or a film is attached to the mesh substrate at an outer edge to provide support to the flexible mesh substrate, improve handling and/or keep items from falling off the food support.

## Description

### BACKGROUND OF THE INVENTION

### Field of the Invention

This invention is directed to a food support, e.g., a flexible mesh basket or cooking sheet, for holding food items while heating or toasting in an oven.

### Discussion of Related Art

Polymer coated cooking sheet and baskets are known for heating and toasting sandwiches in ovens. Such temperature resistant sheets or baskets are particularly useful for quickly (e.g., in about 30 seconds) toasting sandwiches in high speed ovens, such as are available from TurboChef Technologies, Inc. (Atlanta, Georgia). High speed ovens typically incorporate several cooking elements, such as a hot air heating element (often in connecting with a vacuum element), an infrared heating element and a microwave heating element. A wire rack for supporting the food is typically disposed below the hot air heating element and above at least one of the infrared heating element and the microwave heating element.

While being useful for toasting sandwiches, known polymer coated cooking sheets and baskets have not also provided the desired cooking and/or browning characteristics for other food items, such as pizza. There is a need for an improved cooking sheet or basket for use in cooking various food items in high temperature/high speed ovens.

### SUMMARY OF THE INVENTION

A general object of the invention is to provide an improved cooking basket or sheet, particularly for use in high speed ovens.

The general object of the invention can be attained, at least in part, through a food support for holding food items during cooking in an oven. The food support includes a mesh substrate with an outer edge and a plurality of openings having a length and/or width of about 0.15 inch (about 0.381 cm) to about 0.5 inch (about 1.27 cm). The food support of this invention includes an edge reinforcement member attached to the mesh substrate at the outer edge. A coating including a heat resistant polymer coats at least one of the mesh substrate and the edge reinforcement member.

The invention further provides a food support for holding food items during cooking in an oven that includes a mesh substrate with an outer edge and a plurality of openings having a length and/or width of about 0.15 inch (about 0.381 cm) to about 0.5 inch (about 1.27 cm). The mesh substrate is formed of a material including fiberglass, nylon, polyester, aramid, polyethylene, polyolefin, ceramic, polysulfone, polyketone, polyphenylene sulfide, polyimide or combinations thereof. The food support has a coating including a heat resistant polymer on the mesh substrate. The heat resistant polymer can include, for example, a fluoropolymer, a fluoroelastomer, a silicone rubber, a silicone resin, a urethane rubber, a urethane resin, a polyketone, a polyamide-imide, a polyphenylene sulfide, a liquid crystal polyester, a polyether sulfone or combinations thereof. The coated mesh substrate has a thickness of greater than about 35 mils, and more desirably greater than about 45 mils. An edge reinforcement member is attached to the mesh substrate at the outer edge. The edge reinforcement member desirably includes either a coated edge substrate or a film.

The food support of this invention, which can be formed, for example, as a cooking basket or a planar cooking sheet, is useful for placing and removing food items from, and holding food items while in, an oven. The food support of this invention is desirably high temperature resistant, and the thickness of the coated mesh substrate and/or the size of the openings provide the ability to cook different food items and provide, for example, the desired food browning, toasting and/or heating characteristics.

### BRIEF DESCRIPTION OF THE DRAWINGS

These and other objects and features of this invention will be better understood from the following detailed description taken in conjunction with the drawings, wherein:
- FIG. 1: is a perspective view of a food support according to one embodiment of this invention;
- FIG. 2: is a side view of the food basket of FIG. 1; and
- FIG. 3: is a partial sectional view of the food support of FIGS. 1 and 2, taken in an area of an edge reinforcement member.

### DESCRIPTION OF PRESENTLY PREFERRED EMBODIMENTS

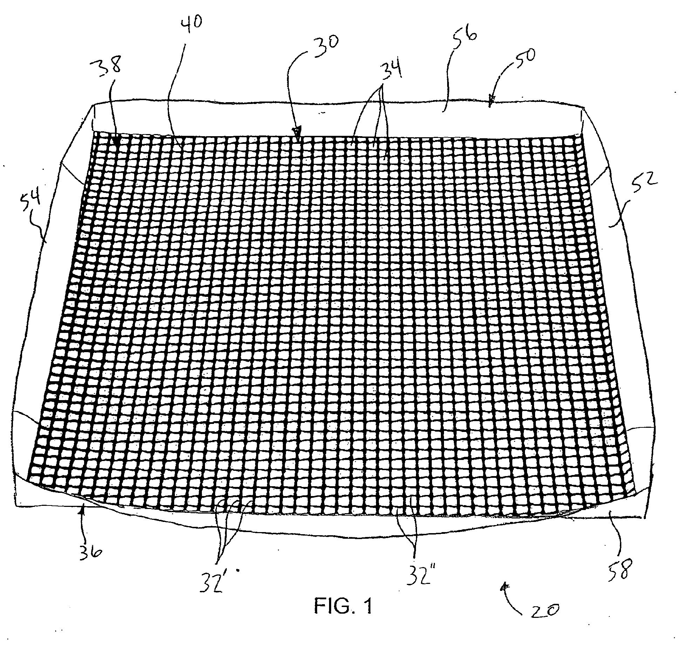

FIGS. 1-3 illustrate a food support 20 according to one embodiment of this invention. The food support 20 is particularly useful for holding and heating food items, such as, without limitation, sandwiches, chicken wings or pizza in an oven. The food items may be placed directly on the food support 20, or, to further avoid food drippings, a sheet of a suitable cooking paper or film, e.g., siliconized sheet, can be placed between the food items and the food support 20.

The food support 20 includes a mesh substrate 30. The mesh substrate of this invention can be formed, for example, from woven or otherwise interconnecting yarns, threads and/or wires, or can be an apertured film. Various materials are available for forming the mesh substrate 30 including, without limitation, fiberglass, nylon, polyester, aramid, polyethylene, polyolefin, ceramic, polysulfone, polyketone, polyphenylene sulfide, polyimide, or combinations thereof. In one particularly preferred embodiment, as shown in FIGS. 1-3, the mesh substrate 30 is formed of fiberglass threads. Each strand 32 of the mesh substrate 30 of FIGS. 1-3 is formed of two fiberglass threads, with the two threads of the strands 32' extending in a first direction twisted or braided around the two threads of each of the strands 32" extending in the perpendicular direction. As will be appreciated by those skilled in the art following the teachings herein provided, various and alternative mesh materials are available for use in the food support of this invention. Mesh substrate 30 of this invention can be injection molded or thermoformed, for example, and then die cut or otherwise structurally separated.

The mesh substrate 30 includes a plurality of openings 34 having a length and/or width of about 0.15 inch (about 0.381 cm) to about 0.5 inch (about 1.27 cm), desirably about 0.2 inch (about 0.508 cm) to about 0.3 inch (about 0.762 cm), and more desirably about 0.22 inch (about 0.559 cm) to about 0.28 inch (about 0.711 cm). The openings 34 have a generally square shape, although alternative shapes, such as rectangular, circular or irregular shapes, can also be used. As will be appreciated, forming the mesh of yarns or threads can result in, for example, less than perfectly square-shaped openings. Therefore, in one embodiment of this invention, the lengths and widths across the plurality of openings 34 vary by a small margin, but at at least some point include the measurements described above.

The mesh substrate 30 includes a coating 40 thereon. The coating 40 desirably includes a heat resistant polymer. As used herein, "heat resistant" refers to the ability of a material to withstand temperatures of about 400°F (about 204.4°C) or greater. Exemplary heat resistant polymers available for use in the coatings of this invention include, without limitation, fluoropolymers, fluoroelastomers, silicone rubbers, silicone resins, urethane rubbers, urethane resins, polyketones, polyamide-imides, polyphenylene sulfides, liquid crystal polyesters, polyether sulfones and combinations thereof. In the preferred embodiment shown in FIGS. 1-3, the fiberglass mesh substrate 30 is desirably coated with polytetrafluoroethylene (PTFE). Coating can be accomplished by various and alternative coating techniques known and available to those skilled in the art, such as, without limitation, spray or dip coating techniques.

The thickness and number of layers of the coating 40 can be adjusted according to need. In one embodiment of this invention, the coated mesh substrate 30 (i.e., the combined mesh substrate 30 and the coating 40) has a thickness of greater than about 33 mils, desirably greater than about 45 mils, more desirably greater than about 55 mils, and preferably at least about 60 mils.

The food support 20 includes an edge reinforcement member 50 attached to the mesh substrate 30 at a mesh substrate outer edge 36. Desirably, the edge reinforcement member 50 extends around the mesh substrate 30, and is at least partially disposed over and attached to a portion of the mesh substrate 30 at the outer edge 36. The edge reinforcement member 50 can be disposed over one or both sides of the portion of the mesh substrate 30 at the outer edge 36. The mesh substrate 30 includes a food placement area 38 that is not covered by the edge reinforcement material 50.

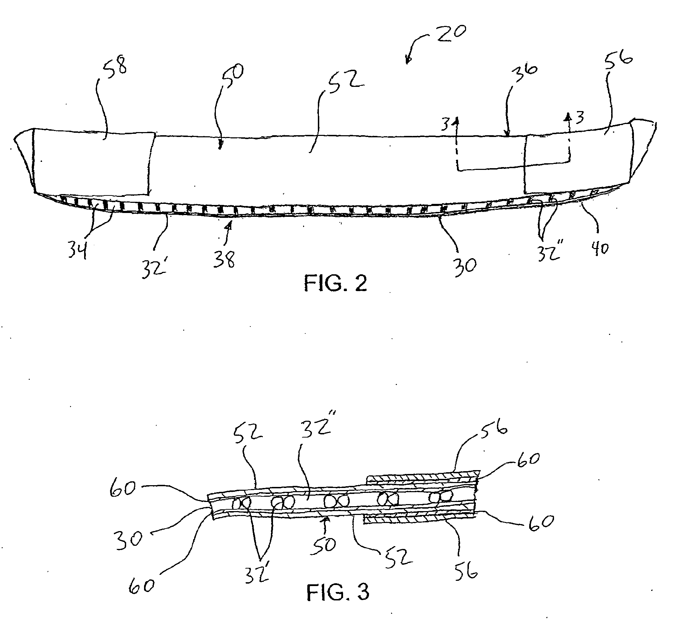

In one embodiment, as shown in FIGS. 1 and 2, the solid edge reinforcement member 50 extends at an angle, e.g., in a generally upward direction, from the food placement area 38 of the mesh substrate 30. The upwardly angled edge reinforcement member 50 shown in FIGS. 1 and 2 beneficially acts as a side wall to help keep food items, or pieces, drippings or crumbs there from, from falling over the sides of the food support 20. As will be appreciated various sizes, shapes and configurations are available for the edge reinforcement member 50. In one embodiment of this invention, the edge reinforcement member is disposed flat, i.e., in plane with the mesh substrate. The edge reinforcement member 50 of this invention desirably has a width of about 0.5 inch (about 1.27 cm) to about 2 inches (about 5.08 cm), and a thickness of about 3 mils to about 20 mils.

In one embodiment of this invention, the edge reinforcement member 50 is formed of one or more films. The film reinforcement member 50 can be applied to one or both sides of the mesh substrate 30 at the outer edge 36, and desirably covers or fills the openings 34 that the film is disposed over. In one embodiment, the film edge reinforcement member 50 is folded over the outer edge 36 to cover a portion of both sides of the mesh substrate 30. Desirably, the film is formed of a heat resistant polymer, such as described above. In one embodiment, the edge reinforcement member 50 is or includes a fluoropolymer film. Exemplary fluoropolymers for forming the fluoropolymer film include perfluoroalkoxy, fluorinated ethylene-propylene, polytetrafluoroethylene, tetrafluoroethylene or combinations thereof.

In another embodiment of this invention, the edge reinforcement member 50 includes a coated edge substrate. The edge substrate can be a fabric sheet, a mesh material, a film or other available substrates, formed of, for example, one or more of the following materials: fiberglass, nylon, polyester, aramid, polyethylene, polyolefin, ceramic, polysulfone, polyketone, polyphenylene sulfide and/or polyimide. The edge substrate is desirably coated with a heat resistant polymer, such as, for example, a fluoropolymer, a fluoroelastomer, a silicone rubber, a silicone resin, a urethane rubber, a urethane resin, polyketone, a polyamide-imide, a polyphenylene sulfide, a liquid crystal polyester, a polyether sulfone or combinations thereof.

Referring to FIGS. 1-3, the edge reinforcement member 50 is a fluoropolymer coated fiberglass material. Four pieces 52, 54, 56 and 58 of the coated fiberglass material are attached to a portion of the mesh substrate 30 at the outer edge 36, with opposing pieces 56 and 58 extending around the food support corners and overlapping opposing pieces 52 and 54. In the embodiment shown in FIGS. 1-3, the overlapping of the coated fiberglass material pieces 52, 54, 56 and 58 desirably secures the sides of the food support 20 in the upwardly angled position. Each of the coated fiberglass material pieces 52, 54, 56 and 58 are folded over the mesh substrate 30, thereby desirably providing a relatively smooth edge.

FIG. 3 is a cross sectional view of the edge reinforcement member 50. In one embodiment of this invention, as shown in FIG. 3, a polymer film 60 is disposed between the edge reinforcement member 50 and the mesh substrate 30. As the fluoropolymer coated fiberglass material of the edge reinforcement member 50 is folded over the mesh substrate 30 in FIGS. 1-3, the polymer film 60 is desirably disposed between the edge reinforcement member 50 and the mesh substrate 30 on each side of the substrate 30. One or more polymer film pieces 60 are disposed between the mesh substrate 30 and each of the coated fiberglass material pieces 52, 54, 56 and 58. As shown in FIG. 3, the polymer film 60 between the mesh substrate 30 and the coated fiberglass material piece 56 can extend around the corner of the food support 20 to also be disposed between the coated fiberglass material pieces 52 and 56.

The polymer film 60 is optional, and is particularly useful, for example, for attaching a separately manufactured coated edge substrate to the coated mesh substrate 30. The polymer film 60 of this invention also desirably includes a heat resistant polymer, such as discussed above. In one embodiment of this invention, the polymer film is a fluorinated ethylene-propylene film, a polytetrafluoroethylene film or combinations thereof. The polytetrafluoroethylene film can be a melt-processable polytetrafluoroethylene film or an unsintered polytetrafluoroethylene film. In one embodiment of this invention, at least a portion of the coated edge substrate includes a coating of the material of the polymer film 60, to promote adhesion. For example, the coated edge substrate includes a partial or full top coat of fluorinated ethylene-propylene where the polymer film comprises a fluorinated ethylene-propylene film.

Thus, the invention provides a food support, particularly a cooking basket or sheet, useful for placing and removing food items from, and holding food items while in, an oven. The food support of this invention is high temperature resistant, and can be used in ovens having retention heat temperatures as high as 1000°F (about 538°C). The thickness of the coated mesh substrate and the size of the openings provide the ability to cook different food items and provide desirably browning and heating characteristics.

It will be appreciated that details of the foregoing embodiments, given for purposes of illustration, are not to be construed as limiting the scope of this invention. Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention, which is defined in the following claims and all equivalents thereto. Further, it is recognized that many embodiments may be conceived that do not achieve all of the advantages of some embodiments, particularly of the preferred embodiments, yet the absence of a particular advantage shall not be construed to necessarily mean that such an embodiment is outside the scope of the present invention.

## Claims

1. A food support for holding food items during cooking in an oven, the food support comprising:
a mesh substrate including an outer edge and a plurality of openings having a length or width of about 0.15 inch to about 0.5 inch;
an edge reinforcement member attached to the mesh substrate at the outer edge; and
a coating including a heat resistant polymer on at least one of the mesh substrate and the edge reinforcement member.

2. The food support according to Claim 1,
wherein the plurality of openings have a length or width of about 0.22 inch to about 0.28 inch.

3. The food support according to Claim 1 or 2,
wherein the coated mesh substrate has a thickness of greater than about 33 mils.

4. The food support according one of the claims 1 to 3,
wherein the coated mesh substrate coating has a thickness of greater than about 45 mils.

5. The food support according one of the claims 1 to 4,
wherein the mesh substrate comprises fiberglass, nylon, polyester, aramid, polyethylene, polyolefin, ceramic, polysulfone, polyketone, polyphenylene sulfide, polyimide, or combinations thereof.

6. The food support according one of the claims 1 to 5,
wherein the heat resistant polymer is selected from a fluoropolymer, a fluoroelastomer, a silicone rubber, a silicone resin, an urethane rubber, an urethane resin, polyketone, a polyamide-imide, a polyphenylene sulfide, a liquid crystal polyester, a polyether sulfone, and combinations thereof.

7. The food support according one of the claims 1 to 6,
wherein the heat resistant polymer comprises polytetrafluoroethylene.

8. The food support according one of the claims 1 to 7,
wherein the edge reinforcement member comprises a coated edge substrate or a film.

9. The food support according to Claim 8,
wherein the coated edge substrate of the edge reinforcement member comprises an edge substrate including fiberglass, nylon, polyester, aramid, polyethylene, polyolefin, ceramic, polysulfone, polyketone, polyphenylene sulfide, or polyimide coated with a fluoropolymer, a fluoroelastomer, a silicone rubber, a silicone resin, an urethane rubber, an urethane resin, polyketone, a polyamide-imide, a polyphenylene sulfide, a liquid crystal polyester, a polyether sulfone, or combinations thereof.

10. The food support according one of the claims 1 to 9,
wherein the edge reinforcement member comprises a fluoropolymer film.

11. The food support according to Claim 10,
wherein the fluoropolymer film comprises perfluoroalkoxy, fluorinated ethylene-propylene, polytetrafluoroethylene, tetrafluoroethylene, or combinations thereof.

12. The food support according one of the claims 1 to 11,
wherein the edge reinforcement member has a width of about 0.5 inch to about 2 inches and a thickness of about 3 mils to about 20 mils.

13. The food support according one of the claims 1 to 12,
wherein the edge reinforcement member is at least partially disposed over a portion of the mesh substrate at the outer edge.

14. The food support according to Claim 13,
wherein the mesh substrate includes a food placement area not covered by the edge reinforcement material and the edge reinforcement member extends at an angle from the food placement area of the mesh substrate.

15. The food support according to Claim 13 or 14,
further comprising a polymer film disposed between the edge reinforcement member and the mesh substrate.

16. The food support according to Claim 15,
wherein the polymer film comprises a fluorinated ethylene-propylene film, a melt-processable or unsintered polytetrafluoroethylene film, or combinations thereof.

17. A food support for holding food items during cooking in an oven, the food support comprising:
a mesh substrate including an outer edge and a plurality of openings having a length or width of about 0.15 inch to about 0.5 inch, the mesh substrate formed of a material including fiberglass, nylon, polyester, aramid, polyethylene, polyolefin, ceramic, polysulfone, polyketone, polyphenylene sulfide, polyimide, or combinations thereof;
a coating including a heat resistant polymer on the mesh substrate, the heat resistant polymer including a fluoropolymer, a fluoroelastomer, a silicone rubber, a silicone resin, an urethane rubber, an urethane resin, polyketone, a polyamide-imide, a polyphenylene sulfide, a liquid crystal polyester, a polyether sulfone, or combinations thereof;
the mesh substrate with the coating having a thickness of greater than about 35 mils; and
an edge reinforcement member attached to the mesh substrate at the outer edge, the edge reinforcement member comprising a coated edge substrate or a film.

18. The food support according to Claim 17,
wherein the plurality of openings have a length or width of about 0.22 inch to about 0.28 inch and the mesh substrate and the coating together have a thickness of about 45 mils to about 90 mils.

19. The food support according to Claim 17 or 18,
wherein the edge reinforcement member includes the coated edge substrate, and further comprising:
the coated edge substrate including an edge substrate formed of a material including fiberglass, nylon, polyester, aramid, polyethylene, polyolefin, ceramic, polysulfone, polyketone, polyphenylene sulfide, or polyimide coated with a fluoropolymer, a fluoroelastomer, a silicone rubber, a silicone resin, an urethane rubber, an urethane resin, polyketone, a polyamide-imide, a polyphenylene sulfide, a liquid crystal polyester, a polyether sulfone, or combinations thereof;
the edge reinforcement member at least partially disposed over a portion of the mesh substrate at the outer edge; and
a polymer film disposed between the edge reinforcement member and the mesh substrate.

20. The food support according one of the claims 17 to 19,
wherein a portion of the coated edge substrate includes a coating of fluorinated ethylene-propylene, and the polymer film comprises a fluorinated ethylene-propylene film.
